# EUROPEAN PATENT SPECIFICATION

(11) **EP 0 712 248 B1**
(45) Date of publication and mention of the grant of the patent: **21.03.2001**
(21) Application number: 95116933.3
(22) Date of filing: 27.10.1995
(51) Int. Cl.: H04N 7/00, H04N 7/087, H04N 5/44

(54) **Improved method for transferring a wide-screen image**
Verbessertes Verfahren zur Übertragung eines Breitbildschirmbildes
Méthode améliorée pour transférer une image à écran large

(30) Priority: 11.11.1994 FI 945333
(43) Date of publication of application: 15.05.1996
(73) Proprietor: NOKIA TECHNOLOGY GmbH, 75175 Pforzheim (DE)
(72) Inventor: Saarinen, Pertti, FIN-24100 Salo (FI); Liuha, Petri, FIN-33540 Tampere (FI); Vänni, Pertti, D-44797 Bochum (DE)
(74) Representative: Stendel, Klaus

(56) References cited:
- EP-A- 0 546 880
- EP-A- 0 666 690

## Description

The invention relates to a method for transferring a wide-screen image according to the preamble of claim 1.

Television standards are already decades old and at present in different parts of the world new systems and methods are being developed for supplementing current television standards and improving the quality of the image. In particular presenting wide-screen images in which the aspect ratio that is the ratio of the width of the image to the height is 16:9, has created a demand to develop new television standards. With respect to television standards, the PAL television standard is used in the Nordic Countries and in Central Europe. Properties of the image transfer of the PAL transfer method can be improved, in addition to processing within the television receiver also by improving the transmission signal itself. This kind of improvement and extension of the PAL transfer method is the so-called PALplus transfer method.

The transmission signal of the PALplus transfer method is compatible with the PAL transmission signal and it can be received with conventional PAL receivers. In the PALplus transfer method, a transmission standard of a video signal has been formed to a wide-screen image with an aspect ratio of 16:9. In the PALplus method, normal television programs which have been produced by an aspect ratio of 4:3 are transmitted as has been presented in a PAL television standard. Thus, on a television receiver with a display screen having a 16:9 aspect ratio, conventional programs with an aspect ratio of 4:3 can be presented, for example, by placing the image in the middle of the screen. When a wide-screen program is transmitted according to the PALplus method and it is received on a conventional television receiver with an aspect ratio of 4:3, the transmitted 16:9 image is placed in the middle of the screen so that black regions remain in the upper and lower part of the active image field. In a TV receiver which is equipped with a wide-screen picture tube and which has an aspect ratio of 16:9, the entire screen area will then be in use.

In a PAL transmission signal, the image consists of 625 lines of which 576 are visible lines. In a wide-screen image according to the PALplus transfer method there are only 432 useful lines and the rest of the lines are transmitted as black lines. In the PALplus method, those normally black lines in the upper and lower edges of the active image field are utilized. These empty black lines have additional information integrated into them by a suitable modulation method. This additional information can be interpreted only in television receivers which utilize the PALplus method. Since the vertical resolution of the wide-screen image has been reduced by 25%, a signal improving the vertical resolution of the image that is a so-called helper signal is transmitted as additional information to the receiver. When receiving wide-screen programs, a PALplus receiver forms an image by combining the transmitted 432 lines belonging to the active image field with the lines transmitted in the upper and lower edges of the image and belonging to the helper signal. The visibility of the line structure in an active image field is reduced by using, for example, progressive scanning. A PALplus transfer method has been described, among others, in the documents: "PALplus ... ready for the take-off", IFA, August 1993; "PALplus System Specification", ITU Radiocommunications Study Group Document 11A/..-E, 30 June 1994 and "Wide Screen Signalling" (WSS); ETSI Standard (draft) ETS 300294 (Nov. 1993). See also EP-A-0 666 690, published on 09.08.1995.

In a PALplus transfer method there is an area of 72 lines above the active image field and a corresponding area of 72 lines which is below the channel area. A helper signal is placed in each area as two signal packets. Problems arise when a subtitle video signal is added to the transmitted video signal that is when subtitling is transmitted to the receiver in addition to the image. The compatibility of the PAL method and the PALplus method requires that the subtitling has to be arranged in the active image field which means that up to about 30% of the image field is covered by subtitles. This reduces the quality of the image, especially in PAL receivers, as the black beams in the upper and lower parts of the image decrease the image size by a ratio of 16:9. It should be noted that the matter is a real problem in areas and countries where subtitling is widely used at present in the transmission of programs made in foreign languages. This is especially the case with feature films where it is desirable to transmit the original sound field with its special effects to the television viewers.

It is an object of the invention to bring about a method for transferring wide-screen images, in particular an PALplus transfer method where the above mentioned weaknesses of the conventional PALplus method have been attempted to be eliminated.

The invention is set out in claim 1. Advantageous embodiments are set out in the dependent claims.

According to the most preferable embodiment of the invention, an auxiliary signal, such as the helper signal is placed below the active image field and the auxiliary signal, such as the helper signal is formed again from the original auxiliary signal, such as the helper signal by altering the order of the lines.

One advantage of the invention is that a subtitle video signal in the subtitling can be transferred outside the actual active image field. On a conventional screen with an aspect ratio of 4:3, the subtitling can be made visible outside the active image field when wide-screen program is received. On a wide screen the subtitling is summed to the image from a video memory or through the teletext channel.

Another advantage of the invention is that, for example, coding practice and encoder of the PALplus method according to the standard can be used in the transmission system. The basic format is realized so that an auxiliary signal, such as a helper signal is placed in each image entirely below the active image field and at the same time, the order of the lines of the auxiliary signal, such as the helper signal, is preferably altered.

A further advantage of the invention is that the place of the subtitle video signal and the subtitling in the data area of the transmitted video signal is preferably directly below the active image field by forming, however, black intermediate regions by means of an auxiliary signal, such as a helper signal. This arrangement allows also a slight enlargement of a video image in a receiver without having the subtitling cut out.

Another advantage of the invention is also the fact that it can be applied flexibly, for example, in the case of one and/or two subtitle lines so that the part of an auxiliary signal, such as a helper signal is always maximized. When no subtitling is transmitted and it is thus not in use, the area reserved for it in the data area of the video signal is preferably replaced by the omitted auxiliary signal, such as the helper signal or its sub-component. Dynamically, the vertical resolution of the video image is returned to full during the breaks in subtitling.

A further advantage of the invention is that the outcome of the reception and the video image presented on a receiver can be improved by means of movement detection by using relatively simple procedures. Then forming of errors in the moving parts of the video image is prevented.

An additional advantage of the invention is a possible independent processing of subtitling. A separate signal is formed for the subtitling. Then it is possible to control the contrast, colour, size etc. of the subtitling area. In this way, the subtitling can be arranged so that it is easy to distinguish from the actual video image in a desired way.

In the following, the invention is explained by means of the attached drawings in which
- fig. 1: shows the operating principle of the PALplus transfer method;
- fig. 2: shows an image field according to the original PALplus method;
- fig. 3: shows an image field according to an improved PALplus method;
- fig. 4: shows a screen of a conventional PAL receiver when subtitling is transmitted using the improved PALplus method;
- fig. 5: shows an image of a PAL receiver when subtitling is sent in a prior art manner;
- fig. 6: illustrates in the form of a block diagram the combining of a subtitle video signal and an original helper signal into a combination of a subtitle video signal and a new helper signal;
- fig. 7: shows an improved PALplus method in which, in connection with decoding, a helper signal is complemented for its missing part by using an existing helper signal;
- fig. 8: shows an improved PALplus system in which movement detection is utilized in decoding and;
- fig. 9: shows an image field with a wide-angle aspect ratio of an improved PALplus system.

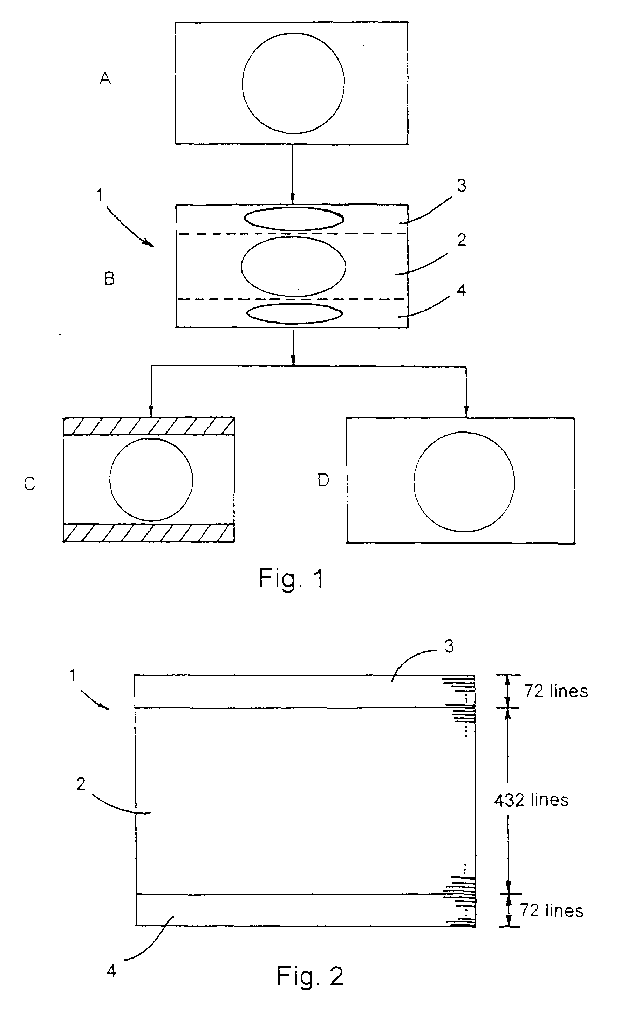

A PALplus transfer method according to the standard is illustrated in Fig. 1. In the production of programs an image is formed with the aspect ratio of 16:9. Of the image a PAL transmission with 625 lines is formed with 576 visible lines. For a transmission B, a PALplus signal is formed in which a wide-screen program has been formed in a so-called letterbox format in which there are 432 useful lines, that is lines belonging to the active image field. In the upper and lower regions 3, 4 of the active image field 2 of the image field 1 there are lines, in all 2 x 72, which are normally black lines. To these lines in a PALplus system additional information is included by using a suitable modulation method. This additional information can be detected and utilized only on a PALplus receiver. The additional information contains an auxiliary signal, that is a so-called helper signal for giving additional information about the vertical resolution of the image. One or more lines can furthermore be used as a measuring line of reflections which arise on a transfer path and this measuring line is used for controlling the operation of the reflect erasing circuit of the receiver. When a transmission signal according to a PALplus method is received on a conventional PAL system receiver C, the wide-screen program is usually placed on the screen in such a way that there are dark areas in the lower and upper edges of the image and the image itself is formed of 432 active lines. When a transmission signal according to the PALplus method is received on a PALplus receiver D which has been adapted to this system, the wide-screen image fills the whole screen. The wide-screen image comprises 432 active lines and lines which remain outside the image field and which are mentioned in the transmission and are included in the helper signals 3, 4 on the upper and lower parts. The helper signal is used for improving the vertical resolution of the received image.

A video image, that is an image field according to the original PALplus signal is illustrated in Fig. 2. The image field has been divided into an active image field 2 and its upper and lower areas that is an upper area 3 and a lower area 4. The helper signal comprises two helper signal packets of which the first one has been included in the lines of the upper area 3 of the image field and the second one in the lines of the lower area 4. The image field is divided into two interlaced half image fields and these are further subdivided into even and odd half image fields. Helper signal packets are different on odd and even half image fields according to the contents of the image: on even ones Ea1, Ea2 and on odd ones Oa1, Oa2.

In the improved PALplus method according to the invention, in the transfer of wide-screen images, the subtitling is transmitted as such a subtitle video signal which replaces part of the helper signal and then data of the helper signal which is added to the earlier transmitted image is used in the place of the missing helper signal.

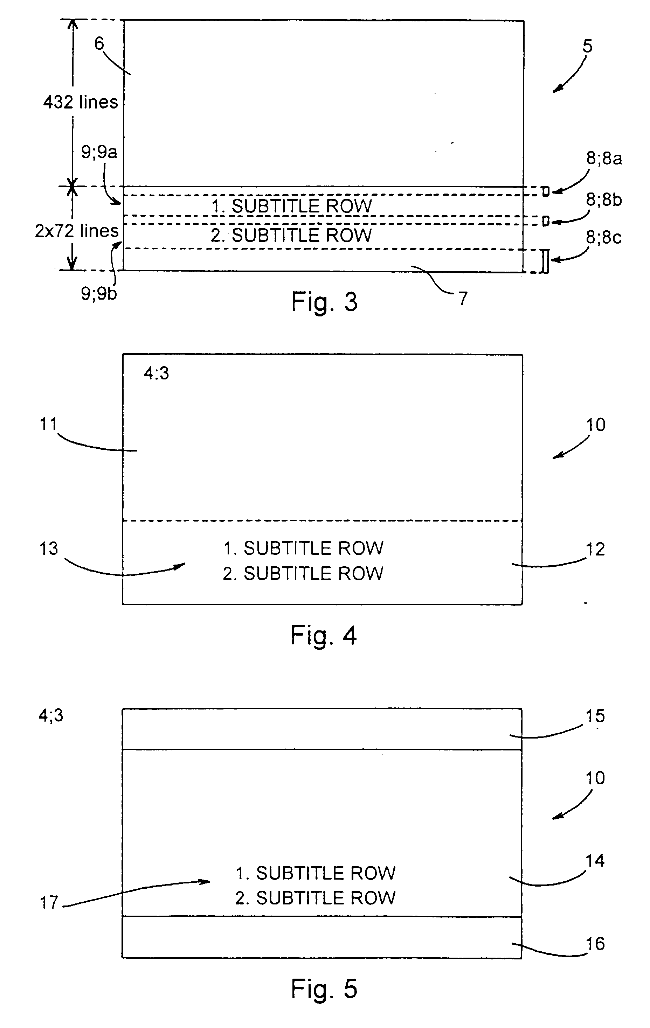

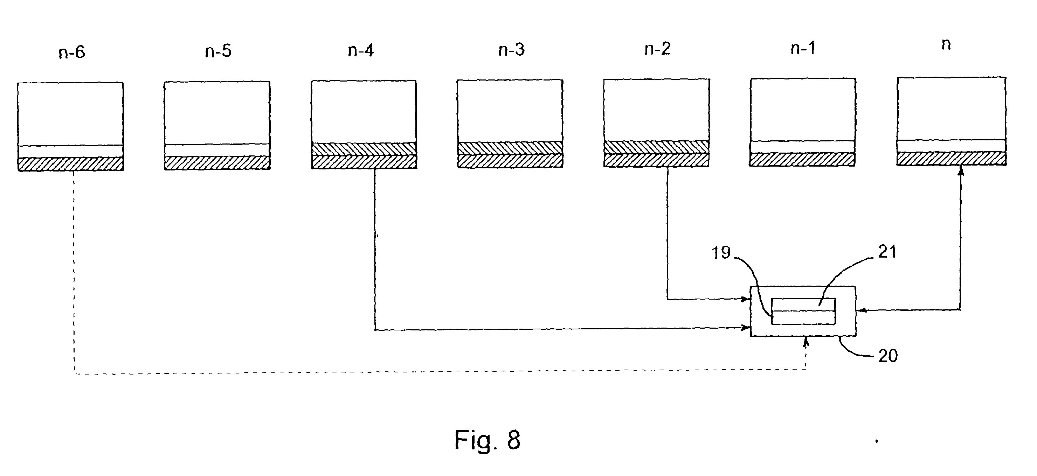

In the most preferable embodiment of the method according to the invention a helper signal is adapted to the lines arranged in the lower area 7 of the active image field 6 of the image field 5 as has been illustrated in Fig. 3. The active image field 6 is then arranged into the upper area of the image field 5 and the other lines which are black and/or which contain additional information are arranged into the area 7 in the lower part of the image field 5. Only part of the helper signal is sent when subtitling is sent as a subtitle video signal. This has been illustrated in Fig. 3 so that transmitted lines 8; 8a, 8b, 8c of the helper signal interlace with subtitle video signal lines 9; 9a, 9b. Data included in the helper signal of an earlier transmitted image is used in the place of missing helper signal lines used for the subtitle video signal lines. Thus the lower area 7 of the image field 5, that is the area of the helper signal, is used for subtitling when necessary.

Due to the method according to the invention, in a conventional PAL receiver with screen ratios 4:3, subtitling 13 is placed directly in the lower area 12 of the active image field 11 in the screen 10 as has been illustrated in Fig. 4. When the normal PALplus method is used, subtitling 17 is placed in a PAL receiver in an active image field 14 and above and below it in the screen 10 there remain black rectangular beams 15, 16 as can be seen in Fig. 5. In a PALplus receiver with an aspect ratio of 16:9 in a method according to the invention, a subtitle video signal is summed into the image preferably from the video memory when teletext subtitling is not in use. As has been shown at the PALplus receiver D in Fig. 1, the wide-screen program is zoomed normally from its active image field in its entirety to the screen.

According to a preferable embodiment of the invention, 50% of the helper signal is transmitted when a subtitle video signal is being transmitted, and then chronologically at every other image field, data included in the helper signal of the previous image field is used. This does not cause any changes in the static image. An error being caused in a moving image is so small that it hardly has any effect on the quality of the image as it appears on the receiver.

In a method according to the invention, an auxiliary signal, such as a helper signal, is preferably assembled again from the original auxiliary signal, such as a helper signal. A new, improved helper signal consists of lines of helper signal components Ea1, Ea2, Oa1, Oa2 of the original PALplus system, with the order of the lines having been changed. The new helper signal is divided in one embodiment into four parts that is packets Eb1, Eb2, Ob1, Ob2 in such a way that each half image field contains one helper signal packet and a subtitle component.

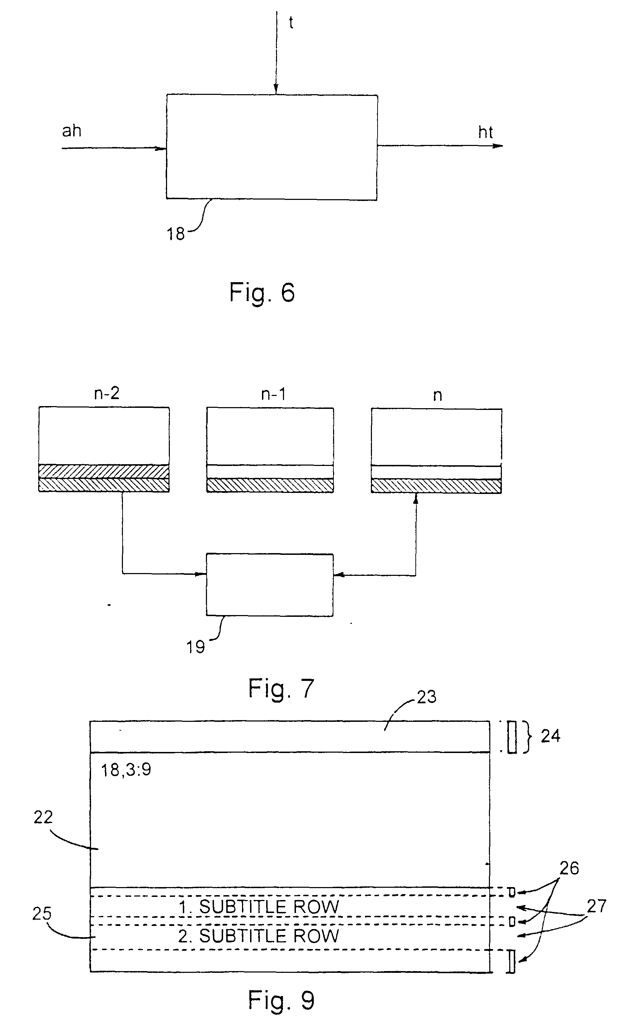

The original helper signal ah and a possible periodically recurring subtitle video signal t are fed into a signal processor 18, Fig. 6, from which a helper/subtitle-that is ht-combination signal is received as an output signal. Each new helper signal packet, such as the above helper signal packet Eb1, Eb2, Ob1, Ob2 is assembled into its new form from the original helper signal ah in a signal processor 18 and an output signal ht is formed out of it. Part of the new helper signal is substituted in an output signal 1s by a subtitle video signal t when subtitling is transmitted. This procedure is followed also in other embodiments of the invention in which the original helper signal is processed and it is added to the subtitle video signal.

Each new helper signal packet Eb1, Eb2, Ob1, Ob2 is formed of 36 lines. The division of the helper signal into different packets Eb1, Eb2, Ob1, Ob2 and subtitle components appears in Table 1. The helper signal packet Eb1 is formed of the odd helper lines of the original helper signal packets Ea1 and Ea2 in the first even half image field E(n). The helper signal packet Eb2 is formed of the even helper lines of the original helper signal packets Ea1 and Ea2 in the second even half image field E(n+1). Respectively, a helper signal packet Ob1 is formed of the odd helper lines of the original helper signal packets Oa1 and Oa2 in the second odd half image field O(n+1) and a helper signal packet Ob2 of the even helper lines of the original helper signal packets Oa1 and Oa2 in the first odd half image field O(n). This method of packaging decreases the error which shows in the image, this error being formed when only half of a helper signal is transmitted. This table shows also the original division of helper signal components Ea1, Ea2, Oa1, Oa2, included in the PALplus signal, into separate half image fields.

**Table 1**

| | Even E(n) +(R-Y) | | Odd O(n) -(R-Y) | | Even E(n+1) -(R-Y) | | Odd O(n+1) +(R-Y) | |
|---|---|---|---|---|---|---|---|---|
| Original: | Ea1 | Ea2 | Oa1 | Oa2 | Ea1 | Ea2 | Oa1 | Oa2 |
| Subtitle version: | Eb1 | subt. | Ob2 | subt. | Eb2 | subt. | Ob1 | subt. |
| Breaks in subtitles: | Eb1 | Eb2 | Ob2 | Ob1 | Eb2 | Eb1 | Ob1 | Ob2 |

Table 1 shows a subtitle version in which a subtitle video signal has been connected with a helper signal and the places of subtitle breaks in which the helper signal is transmitted in its entirety. Helper signal packets are recognizable according to even/odd -field information E/O and according to phase information +/- of the (R-Y)-colour signal on a starting line of the helper signal. Of the field information and the phase information, four combinations are formed for recognition. The use of the colour signal information eliminates the need for forming and use of a special symbol signal. The places of four packets Eb1, Eb2, Ob1, Ob2 of the helper signal are changed in groups of four half image fields according to Table 1 so that the places of the first and the second packets Eb1, Eb2 are changed alternately in even half image fields and respectively, the places of the third and the fourth packets Ob1, Ob2 are changed alternately in odd half image fields. The use of a subtitle video signal and a respective video subtitle area means that there is a chronological transmission of every other helper signal packet.

When subtitling is not in use, that is a subtitle video signal is not transmitted, a left-out helper signal packet is adapted in the area of the subtitle video signal in each half image field, as presented in Table 1 (breaks in subtitles). The vertical resolution of the presented video image returns dynamically to full during the breaks between subtitling. A special feature is then that chronologically different helper signal packets Eb1, Eb2, Ob1, Ob2 of the image change places according to the chart presented in Table 1.

It is to be noted that in the method according to the invention, helper signals of the original PALplus signal are not rearranged until they reach a signal processor.

Thus in the transmission phase the transmission signal can be coded according to the PALplus standard by using a PALplus encoder. A new helper signal has, however, been arranged in each half image field entirely below the active image field, as has been illustrated in Fig. 3. The place of the subtitle video signal in the data area of the helper signal is below the active image field 6, and the main part of the helper signal which is transmitted and received together with subtitling has been placed on the lowest part. Due to this, the active image field can be zoomed according to the size of the screen used, without subtitling being cut out.

According to a preferable embodiment of the invention, the helper signal packets of the original PALplus signal that is the helper signal packet Ea1/Oa1 of the upper area of the image and the helper signal packet Ea2/Oa2 of the lower area of the image are divided again so that every other line of the helper signal of one even/odd half image field has been placed in the first new signal packet Eb1/Ob1 and every other line of the helper signal has been placed in the second new signal packet Eb2/Ob2. Alternatively, the lines of the helper signal packet Ea1/Oa1 of the upper area of one even/odd half image field are placed in the first new signal packet Eb1, Ob1 and the helper lines of the helper signal packet Ea2, Oa2 of the lower area are placed in the second new signal packet Eb2, Ob2 by retaining the original form of a signal packet.

According to a preferable embodiment of the invention, subtitling can be divided into two modes: presenting one subtitle row in an image and respectively, presenting two subtitle rows in an image. In subtitling with one subtitle row, 25% of the helper signal is retained for use compared to subtitling with two subtitle rows. In this case, the original helper signal Ea1, Ea2; Oa1, Oa2 is divided into eight parts Ec1, Ec2, Ec3, Ec4; Oc1, Oc2, Oc3, Oc4 so that each half image field contains two new helper signal packets which correspond to one helper signal packet regarding their size in the above presented embodiment, and a subtitle component. The first four helper signal packets Ec1, Ec2, Ec3 and Ec4 (and respectively the following four helper signal packets Oc1, Oc2, Oc3, Oc4) are formed in such a way that every fourth helper signal line, that is lines i x 4 + 1, where 1 < i < 18, of the helper signal packet Ea1 (Oa1) of the original even (and respectively odd) half image field are adapted into the packet Ec1 (Oc1), the following every fourth helper signal lines that is lines i x 4 + 2 into the packet Ec2 (Oc2) and respectively the following every fourth helper signal lines that is lines i x 4 + 3 and i x 4 + 4 into the packets Ec3 and Ec4 (Oc3 and Oc4). In this context, helper signal lines of one half image field are numbered in the order 1-72. Thus each helper signal packet Ec1, Ec2, Ec3, Ec4; Oc1, Oc2, Oc3, Oc4 comprises 18 lines. The places of the eight helper signal packets concerned are changed in groups of four half image fields according to Table 2 so that the places of the first and the second helper signal packet pairs Ec1, Ec2 and Ec3, Ec4 are changed alternately in even half image fields and respectively, the places of the first and the second helper signal packet pairs Oc1, Oc2 and Oc3, Oc4 are changed alternately in odd half image fields. Thus the use of the video subtitle area means transmitting chronologically every other helper signal packet pair. It is to be noted that the mode of two subtitle rows is being retained in the embodiment presented in Table 1.

In a preferable embodiment of the invention, the subtitle video signal can be transmitted so that those lines of the helper signal which remain in the place or below the subtitle to be added to the image, are not transmitted at all and thus not used in the image. Thus, for example, the lowest quarter of the active image with the aspect ratio of 16:9 does not include a helper signal or helper data at all. The lines of the helper signal in the upper area of the image are transmitted in eight different packets Ed1, Ed2, Ed3, Ed4; Od1, Od2, Od3, Od4, just like in the embodiment presented previously (Table 2). The difference is, however, that the first new helper signal packet Ed1/Od1 is formed of the helper signal packet Ea1/Oa1 of the upper area in the even/odd half image field of the original helper signal in such a way that every third line of the helper signal that is lines i x 3 + 1, where 1 < i < 18 are contained into it, the second new helper signal packet Ed2/Od2 is formed by including the following every third lines i x 3 + 2 into it and the third new helper signal packet Ed3/Od3 is formed by including the remaining following every third lines i x 3 + 3 into it. Thus there are 18 lines in each packet. The fourth new helper signal packet Ed4/Od4 is formed of the helper signal lines of the lowest quarter in the original image field that is of lines 55-72 which thus belong to the helper signal packet Ea2/Oa2 of the lower area in the original image field.

In the embodiment presented above, the places of eight helper signal packets Ed1, Ed2, Ed3, Ed4; Od1, Od2, Od3, Od4 are changed in groups of four half image fields according to the attached Table 3 so that the use of the subtitle video area means transmitting every other one of the chronological first Ed1/Od1 and third Ed3/Od3 helper signal packets. The second helper signal packet Ed2/Od2 is transmitted on every half image field and the fourth helper signal packet Ed4/Od4 only on subtitle breaks. The second Ed2/Od2 and the fourth Ed4/Od4

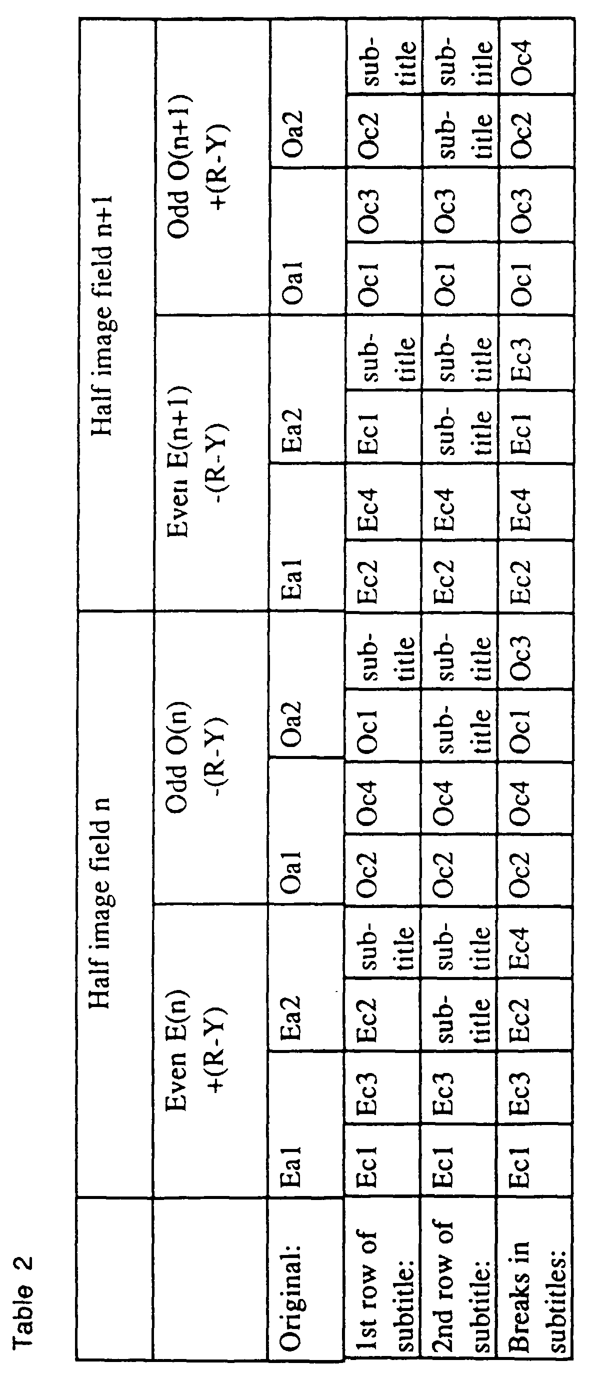

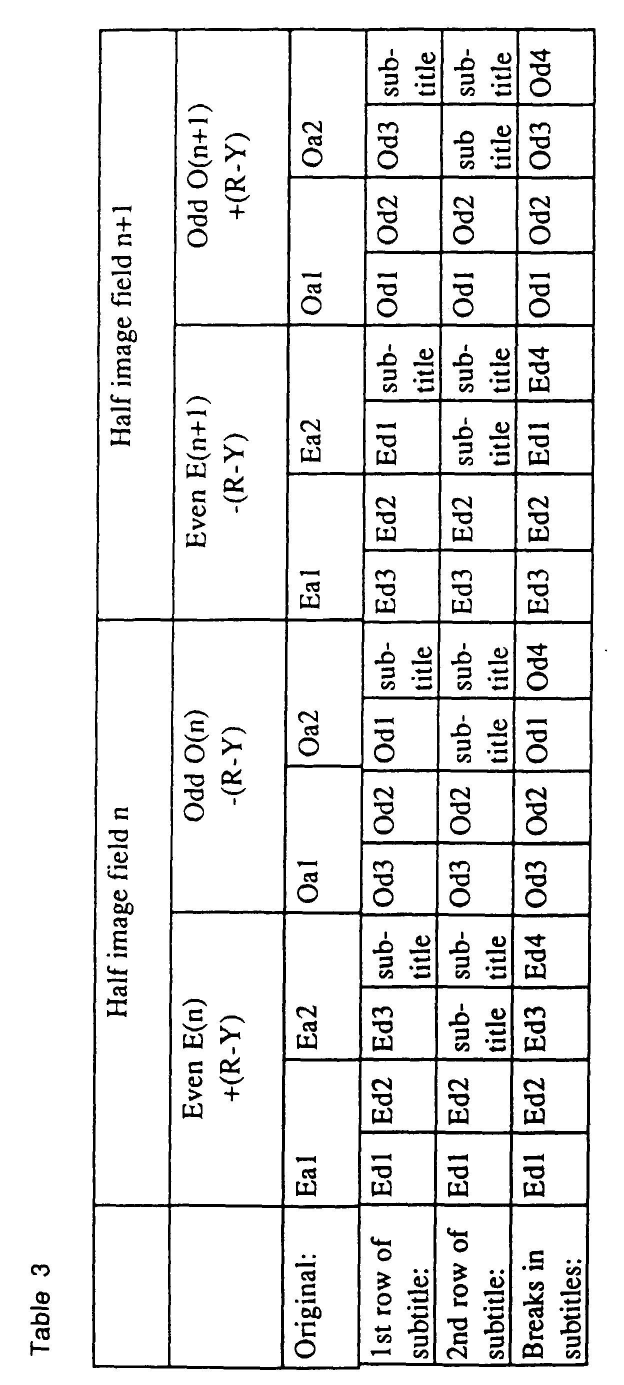

helper signal packets do not change places chronologically. In this embodiment, in subtitling with one subtitle row, the upper area of the image contains all helper lines of the helper signal and in subtitling with two subtitle rows, 67% of the lines of the helper signal.

Above, embodiments of the invention have been presented in which a new, improved helper signal is formed from the original helper signal in connection with coding in the transmission phase. The significance of forming the new helper signal is that the image stays at as high a standard as possible by its quality during decoding and receiving, especially when subtitling is being transferred. Decoding is thus realized in principle according to Fig. 7. As has been stated above, when subtitling is transmitted as a subtitle video signal according to the invention, pall of a helper signal and data it contains is omitted from the video signal. This means in practice that usually half (or a smaller part) of the helper data has been temporarily lost. When, for example, two subtitle rows are transmitted as a subtitle video signal, half of the data of the helper signal is omitted. This missing data of the helper signal is detected and substituted when it is received in a supplementary unit 19, which is added to the decoder, of the helper signal, by the data of the helper signal, this data originates from a chronologically earlier image field n-2, when an image field n is being processed as has been illustrated in Fig. 7.

The above presented embodiments of the method according to the invention can be improved in a receiver by using movement detection that is identification of movement shown in the image. This occurs in principle so that movement is identified from the received new helper signal data of the video signal by comparing the new helper signal with the previously received respective helper signal and based on this information, either old helper signal data, helper signal data damped or nothing at all is used in the missing image parts. Which alternative is chosen depends, among other things, on the intensity of movement, which is identified, for example, by using suitable threshold values. The aim of using movement identification is to ensure that no errors are formed in the image in the moving parts of the image.

Identification of movement from a video image is illustrated in Fig. 8. Movement is detected in a signal processing unit 20 which comprises a movement detector 21. Successive half image fields have been marked as n-4, n-3, n-2, n-1 and n, of which the latter image field n is being processed to be decoded. The helper signal of the image field n is fed into the signal processing unit 20, into which also the helper signal of a previous image field n-4 has been fed (saved). In the movement detector 21, helper signals of half image fields n and n-4 are compared with each other, and in an embodiment the difference for the identification and a threshold function attached to it are used to control the substitution of the helper signal line from the half image field n-2. Helper signal lines used for the difference can either be taken from above or both above and below the line to be substituted. In the movement detector 21, the difference between the image fields n-2 and n-6 at the place of the same helper signal line can also be used for the identification of movement. At least 108 lines of the helper signal data must be saved for movement identification. In a subtitling situation, missing data of the helper signal from the image field n is detected and substituted in a supplementary unit 19 of the helper signal attached to the signal processing unit 20 by data of a helper signal, data of which comes from the chronologically earlier image field n-2.

When subtitling is transmitted, part of the helper signal of the image field is omitted and it is substituted during reception of the signal by data of the helper signal of the earlier image field, as has been stated before. To improve the image quality in connection with decoding, movement identification from the image can be used to help reduce possible errors. The effect of the helper signal in connection with decoding is decreased when information concerning the occurrence of movement is received from the movement detector. This property can be utilized also when noise occurs, especially satellite FM noise, to eliminate non-linear helper signal noise on the screen. This means that the resolution of a stationary image is maintained and that continuous movement causes gradual loss of resolution from a PALplus method to the level of a conventional PAL method.

An improved PALplus method according to the present invention, can also be applied to video signals with wide-angle aspect ratios. In these cases, the aspect ratio of an active image field is equally great or greater than 18,3:9. Then, as a subtitle video signal is used in a subtitling situation, it is possible to place the first helper signal packet 24, which can include even half of the helper signal, in the upper area 23 of the active image field 22 when the lower area 25 is kept in a fixed place. The second helper signal packet 26 and a subtitle video signal 27 attached to it then belong to the lower area 25. The definition is based on the fact that for three lines of a transmitted image there is one line of the helper signal. Thus definition of new lines starts in a situation where there are 378 lines of an active image 22, 72 lines of a subtitle video signal 27 and 126 lines of a helper signal.

A subtitle video signal is a separate signal from the actual video signal of an image. Since a subtitle video signal and the subtitling it gives rise to have always been arranged in the same place on a screen which is conventional by its aspect ratio and on a wide screen, subtitling can be processed separately with respect to the actual image information. For example, contrast adjustment of the subtitle, erasing of flicker of interlacing from subtitling and/or cutting of noise can be applied also in improving the properties of a conventional television picture with a 4:3 ratio of image size. By using the method according to the invention, weaknesses of the present PALplus standard can be avoided in which the subtitle in a wide-screen image form has been defined to be placed on an active image field and thus may cover as much as 25-30% of the image field. In the method according to the invention, in a wide-screen image the subtitle video signal can be separated from the video signal and replaced on an active image field or outside it in a suitable way, as has been presented above. Subtitle video lines and lines of a helper signal are recognized from each other on the basis of the video contents by using, for example, a plane cutter in which the white part of the subtitle is separated from the signal. Thus 1 bit per pixel is enough for subtitle memory. This kind of procedure allows also cleaning of the subtitle and stopping the interlacing on the subtitle. Alternatively, also teletext subtitle rows can be used. In a method according to the invention, it is also possible to use an additional language in a subtitle transfer of teletext so that no traces whatsoever of the subtitle to be covered remain in the subtitle to be presented. The height of the letters in a subtitle video signal is 36 line rows. By using the helper signal, a black area is placed between subtitle rows, which makes it easy to read. In the case that subtitling is attached to the video signal on a 4:3 screen, also a lower subtitle font can be used, since the contents of the video signal do not disturb its legibility. In the method according to the invention, subtitle video format is thus clearly improved regarding its compatibility and transmission properties.

n WSS (Wide Screen Signalling) linked to the PALplus system, the standard proposition contains a definition "picture up" which can be used as a marker signal for expressing the format of the subtitle video signal. Other operations can be expressed from the contents of the video signal automatically. A direct or indirect page number of the teletext added to the WSS signal makes possible to have automatic subtitling in a 16:9 wide-screen image or to change the subtitle language in all receivers. To obtain better compatibility, the subtitling pages of the teletext may include hidden text, which makes possible to set priorities for the automatic language selection.

## Claims

1. A method for transferring a wide-screen image, in particular a PALplus transfer method, in which a video signal representing the wide-screen image is transmitted and it is received and presented either on a wide screen or on a conventional screen and in the method the vertical resolution of the transmitted image is decreased and an auxiliary signal, such as a helper signal of the PALplus transfer method improving the vertical resolution is added to the video signal outside the active image field and in which the vertical resolution of the received image is improved in the television receiver by using the auxiliary signal, such as the helper signal, **characterized** in that subtitling is transmitted as a subtitle video signal and this subtitle video signal is used to replace part of the auxiliary signal, such as the helper signal, when the subtitling is being transmitted, then, with respect to the auxiliary signal not present in the image because of the subtitling, an auxiliary signal, such as the helper signal of an image sent earlier, is used.

2. A method according to claim 1, **characterized** in that an auxiliary signal, such as a helper signal is formed again from the original auxiliary signal, such as the helper signal by altering the order of the lines.

3. A method according to claims 1 or 2, **characterized** in that an auxiliary signal, such as a helper signal is placed below the active image field.

4. A method according to claims 1, 2 or 3, **characterized** in that at least 50% of an auxiliary signal, such as a helper signal is transmitted when a subtitle video signal is transmitted, and then chronologically at every other image, an auxiliary signal, such as a helper signal of the previous image is used.

5. A method according to claim 4, **characterized** in that an auxiliary signal, such as a helper signal is divided into four different packets of auxiliary signals b1, Eb2, Ob1, Ob2) and they are placed into four sequential even/odd half image fields.

6. A method according to claim 5, **characterized** in that the components (Ea1, Ea2; Oa1, Oa2) of the original auxiliary signal, such as the helper signal are divided so that every other auxiliary signal line of one half image field (even, odd) has been placed into the first auxiliary signal packet (Eb1, Ob1) and every other auxiliary signal line into the second auxiliary signal packet (Eb2, Ob2).

7. A method according to claim 5, **characterized** in that auxiliary signal lines, such as helper lines (Ea1, Oa1) of the upper part of one original half image have been placed into the first auxiliary signal packet (Eb1, Ob1) and auxiliary signal lines, such as helper lines (Ea2, Oa2) of the lower part into the second auxiliary signal packet (Eb2, Ob2).

8. A method according to any of the previous claims 4-7, **characterized** in that the places of auxiliary signal packets (Eb1, Eb2, Ob1, Ob2) are changed in groups of four even/odd half image fields so that the places of the first (Eb1) and the second (Eb2) packets are changed alternately in even half image fields and respectively, the places of the third (Ob1) and the fourth (Ob2) packets are changed alternately in odd half image fields.

9. A method according to claim 4, **characterized** in that the original auxiliary signal, such as the helper signal is divided into eight different auxiliary signal packets, such as helper signal packets (Ec1, Ec2, Ec3, Ec4; Oc1, Oc2, Oc3, Oc4) and they are placed into four sequential half image fields.

10. A method according to claim 9, **characterized** in that the original auxiliary signal, such as the helper signal is divided into eight different auxiliary signal packets, such as helper signal packets (Ec1, Ec2, Ec3, Ec4; Oc1, Oc2, Oc3, Oc4) so that each half image field contains two auxiliary signal packets, such as helper signal packets and that the first four helper signal packets (Ec1, Ec2, Ec3 and Ec4) and respectively the following four helper signal packets (Oc1, Oc2, Oc3, Oc4) are formed so that every fourth signal line (i x 4+1, 1 < i < 18) of the auxiliary signal, such as the helper signal of the original even and respectively odd half image field is arranged into the first packet (Ec1) and also into the fifth packet (Oc1), the following every fourth signal lines (i x 4 + 2) into the second packet (Ec2) and the sixth packet (Oc2) and the following every fourth helper signal lines (i x 4 + 3 and i x 4 + 4) into the third and fourth packet (Ec3 and Ec4) and respectively into the seventh and eighth packet (Oc3 and Oc4), and then each signal packet (Ec1, Ec2, Ec3, Ec4; Oc1, Oc2, Oc3, Oc4) comprises 18 lines.

11. A method according to claim 10, **characterized** in that the places of eight auxiliary signal packets, such as helper signal packets are changed in groups of four even/odd half image fields so that the places of the first and the second signal packet pairs (Ec1, Ec2 and Ec3, Ec4) are changed alternately in even half image fields and respectively the places of the first and the second signal packet pairs (Oc1, Oc2 and Oc3, Oc4) are changed alternately in odd half image fields (Table 2).

12. A method according to claim 9, **characterized** in that the original auxiliary signal, such as the helper signal is divided into eight different auxiliary signal packets, such as helper signal packets (Ed1, Ed2, Ed3, Ed4; Od1, Od2, Od3, Od4) so that each half image field contains two auxiliary signal packets, such as helper signal packets and that the first signal packet (Ed1/Od1) is formed of a helper signal packet (Ea1/Oa1) of the original helper signal and the upper part of the even/odd half image so that every third line (i x 3 + 1, 1 < i < 18) of the helper signal is included into it, the second signal packet (Ed2/Od2) is formed by including the following every third lines (i x 3 + 2) into it and the third signal packet (Ed3/Od3) is formed by including the remaining following every third lines (i x 3 + 3) into it and the fourth signal packet (Ed4/Od4) is formed of the helper signal lines (of lines 55-72) of the lowest quarter of the original image field, and thus each packet comprises 18 lines.

13. A method according to claim 12, **characterized** in that the places of eight auxiliary signal packets, such as helper signal packets (Ed1, Ed2, Ed3, Ed4; Od1, Od2, Od3, Od4) are changed in groups of four even/odd half images so that when the subtitle video signal is being transmitted, only every other one of the first (Ed1/Od1) and the third (Ed3/Od3) helper signal packets are transmitted, and the second helper signal packet (Ed2/Od2) is transmitted at each half image field and the fourth helper signal packet (Ed4/Od4) is transmitted only at subtitle breaks.

14. A method according to claim 13, **characterized** in that an auxiliary signal, such as a helper signal, and a subtitle video signal are transmitted so that either one signal packet (Ed4/Od4) or one signal packet (Ed4/Od4) and one other signal packet (Ed3/Od1/Ed1/Od3) are replaced respectively either by one subtitle row or two subtitle rows so that in the case of one subtitle row, one signal packet (E4d/O4d) is removed that is the helper signal of the lower part of the image is removed and in the case of two subtitle rows, the above mentioned signal packet (E4d/O4d) and one of the helper signal packets of the upper part of the active image are removed and that the whole auxiliary signal, such as the helper signal is placed in the video signal transmitted at all times when the subtitle video signal is not being transmitted.

15. A method according to any of the previous claims 5-14, **characterized** in that the components of an auxiliary signal, such as a helper signal have been synchronized into the video signal to be transmitted according to odd/even image field information and the figure shown by the phase of the (R-Y) signal of the starting line of the auxiliary signal, such as the helper starting line.

16. A method according to any of the previous claims, **characterized** in that at the transmission end, an auxiliary signal, such as a helper signal according to the standard, is rearranged in a signal processor (18) where a subtitle video signal to be transmitted is connected to it.

17. A method according to any of the previous claims, **characterized** in that an auxiliary signal, such as a helper signal is supplemented in connection with a subtitle video signal controlled by a movement detector so that movement is recognized of the new auxiliary signal in an auxiliary signal and based on this information, alternatively the old auxiliary signal is used, the old auxiliary signal is used in a damped form or the old auxiliary signal is not used at all in the missing parts.

## Patentansprüche

1. Verfahren zum Übertragen eines 16:9-Bildes, insbesondere ein PALplus-Übertragungsverfahren, bei dem ein das 16:9-Bild repräsentierendes Videosignal gesendet und das empfangen und entweder auf einem 16:9-Bildschirm oder auf einem konventionellen Bildschirm dargestellt wird, und bei dem die vertikale Auflösung des gesendeten Bildes verringert und ein Zusatzsignal, wie z.B. ein Helper-Signal, des PALplus-Übertragungsverfahrens, das die vertikale Auflösung verbessert, zum Videosignal außerhalb des aktiven Bildfeldes addiert wird, und bei dem die vertikale Auflösung des empfangenen Bildes im Fernsehempfänger mit Hilfe des Zusatzsignals, wie z.B. des Helper-Signals, verbessert wird, dadurch gekennzeichnet, dass Untertitel als Untertitel-Videosignal gesendet werden und dass dieses Untertitel-Videosignal verwendet wird, um einen Teil des Zusatzsignals, wie z.B. das Helper-Signal, zu ersetzen, während die Untertitel gesendet werden, und dann in Bezug auf das im Bild aufgrund der Untertitel nicht vorhandene Zusatzsignal ein Zusatzsignal, wie z.B. das Helper-Signal, eines früher gesendeten Bildes verwendet wird.

2. Verfahren nach Anspruch 1, dadurch gekennzeichnet, dass ein Zusatzsignal, wie z.B. ein Helper-Signal, wieder aus dem ursprünglichen Zusatzsignal, wie z.B. dem Helper-Signal, gebildet wird, indem die Reihenfolge der Zeilen geändert wird.

3. Verfahren nach Anspruch 1 oder 2, dadurch gekennzeichnet, dass ein Zusatzsignal, wie z.B. ein Helper-Signal, unter das aktive Bildfeld gesetzt wird.

4. Verfahren nach Anspruch 1, 2 oder 3, dadurch gekennzeichnet, dass wenigstens 50% eines Zusatzsignals, wie z.B. eines Helper-Signals, gesendet werden, wenn ein Untertitel-Videosignal gesendet wird, und dann chronologisch bei jedem zweiten Bild ein Zusatzsignal, wie z.B. ein Helper-Signal, des vorherigen Bildes verwendet wird.

5. Verfahren nach Anspruch 4, dadurch gekennzeichnet, dass ein Zusatzsignal, wie z.B. ein Helper-Signal, in vier verschiedene Pakete von Zusatzsignalen (Eb1, Eb2, Ob1, Ob2) unterteilt wird, die in vier sequenzielle gerade/ungerade Halbbildfelder gesetzt werden.

6. Verfahren nach Anspruch 5, dadurch gekennzeichnet, dass die Komponenten (Ea1, Ea2; Oa1, Oa2) des ursprünglichen Zusatzsignals, wie z.B. des Helper-Signals, so unterteilt werden, dass jede zweite Zusatzsignalzeile eines Halbbildteldes (gerade, ungerade) in das erste Zusatzsignalpaket (Eb1, Ob1) und jede zweite Zusatzsignalzeile in das zweite Zusatzsignalpaket (Eb2, Ob2) gesetzt wurde.

7. Verfahren nach Anspruch 5, dadurch gekennzeichnet, dass Zusatzsignalzeilen, wie z.B. Hilfszeilen (Ea1, Oa1) des oberen Teils eines ursprünglichen Halbbildes in das erste Zusatzsignalpaket (Eb1, Ob1) und Zusatzsignalzeilen, wie z.B. Hilfszeilen, (Ea2, Oa2) des unteren Teils in das zweite Zusatzsignalpaket (Eb2, Ob2) gesetzt wurden.

8. Verfahren nach einem der vorherigen Ansprüche 4-7, dadurch gekennzeichnet, dass die Orte von Zusatzsignalpaketen (Eb1, Eb2, Ob1, Ob2) in Gruppen von vier geraden/ungeraden Halbbildfeldern gewechselt werden, so dass die Orte der ersten (Eb1) und der zweiten (Eb2) Pakete abwechselnd in geraden Halbbildfeldern und die jeweiligen Orte der dritten (Ob1) und der vierten (Ob2) Pakete abwechselnd in ungeraden Halbbildfeldern gewechselt werden.

9. Verfahren nach Anspruch 4, dadurch gekennzeichnet, dass das ursprüngliche Zusatzsignal, wie z.B. das Helper-Signal, in acht verschiedene Zusatzsignalpakete, wie z.B. Helper-Signalpakete, (Ec1, Ec2, Ec3, Ec4; Oc1, Oc2, Oc3, Oc4) unterteilt wird, die in vier sequenzielle Halbbildfelder gesetzt werden.

10. Verfahren nach Anspruch 9, dadurch gekennzeichnet, dass das ursprüngliche Zusatzsignal, wie z.B. das Helper-Signal, so in acht verschiedene Zusatzsignalpakete, wie z.B. Helper-Signalpakete, (Ec1, Ec2, Ec3, Ec4; Oc1, Oc2, Oc3, Oc4) unterteilt wird, dass jedes Halbbildfeld zwei Zusatzsignalpakete, wie z.B. Helper-Signalpakete, enthält, und dass die ersten vier Helper-Signalpakete (Ec1, Ec2, Ec3 und Ec4) und jeweils die folgenden vier Helper-Signalpakete (Oc1, Oc2, Oc3, Oc4) so gebildet werden, dass jede vierte Signalzeile (i x 4+1, 1 < i < 18) des Zusatzsignals, wie z.B. des Helper-Signals, des ursprünglichen geraden bzw. ungeraden Halbbildfeldes zum ersten Paket (Ec1) und auch zum fünften Paket (Oc1), die folgenden jeweils vierten Signalzeilen (i x 4 + 2) zum zweiten Paket (Ec2) und zum sechsten Paket (Oc2) und die folgenden jeweils vierten Helper-Signalzeilen (i x 4 + 3 und i x 4 + 4) zum dritten und zum vierten Paket (Ec3 und Ec4) und jeweils zum siebten und zum achten Paket (Oc3 und Oc4) gruppiert sind, und dann jedes Signalpaket (Ec1, Ec2, Ec3, Ec4; Oc1, Oc2, Oc3, Oc4) 18 Zeilen umfasst.

11. Verfahren nach Anspruch 10, dadurch gekennzeichnet, dass die Orte von acht Zusatzsignalpaketen, wie z.B. den Helper-Signalpaketen, in Gruppen von vier geraden/ungeraden Halbbildfeldern gewechselt werden, so dass die Orte des ersten und des zweiten Signalpaketpaars (Ec1, Ec2 und Ec3, Ec4) abwechselnd in geraden Halbbildfeldern und die jeweiligen Orte des ersten und des zweiten Signalpaketpaars (Oc1, Oc2 und Oc3, Oc4) abwechselnd in ungeraden Halbbildfeldern gewechselt werden (Tabelle 2).

12. Verfahren nach Anspruch 9, dadurch gekennzeichnet, dass das ursprüngliche Zusatzsignal, wie z.B. das Helper-Signal, in acht verschiedene Zusatzsignalpakete, wie z.B. Helper-Signalpakete, (Ed1, Ed2, Ed3, Ed4; Od1, Od2, Od3, Od4) unterteilt wird, so dass jedes Halbbildfeld zwei Zusatzsignalpakete, wie z.B. Helper-Signalpakete, enthält, und dass das erste Signalpaket (Ed1/Od1) aus einem Helper-Signalpaket (Ea1/Oa1) des ursprünglichen Helper-Signals und dem oberen Teil des geraden/ungeraden Halbbildes gebildet wird, so dass jede dritte Zeile (i x 3 + 1, 1 < i < 18) des Helper-Signals darin enthalten ist, das zweite Signalpaket (Ed2/Od2) dadurch gebildet wird, dass die folgenden jeweils dritten Zeilen (i x 3 + 2) darin einbezogen werden, und das dritte Signalpaket (Ed3/Od3) dadurch gebildet wird, dass die restlichen folgenden jeweils dritten Zeilen (i x 3 + 3) darin einbezogen werden, und das vierte Signalpaket (Ed4/Od4) aus den Helper-Signalzeilen (von Zeilen 55-72) des untersten Viertels des ursprünglichen Bildfeldes gebildet werden, so dass jedes Paket 18 Zeilen umfasst.

13. Verfahren nach Anspruch 12, dadurch gekennzeichnet, dass die Orte von acht Zusatzsignalpaketen, wie z.B. den Helper-Signalpaketen, (Ed1, Ed2, Ed3, Ed4; Od1, Od2, Od3, Od4) in Gruppen von vier geraden/ungeraden Halbbildern gewechselt werden, so dass, wenn das Untertitel-Videosignal gesendet wird, nur jedes zweite der ersten (Ed1/Od1) und der dritten (Ed3/Od3) Helper-Signalpakete gesendet werden, und das zweite Helper-Signalpaket (Ed2/Od2) an jedem Halbbildfeld und das vierte Helper-Signalpaket (Ed4/Od4) nur bei Untertitelpausen gesendet werden.

14. Verfahren nach Anspruch 13, dadurch gekennzeichnet, dass ein Zusatzsignal, wie z.B. ein Helper-Signal, und ein Untertitel-Videosignal, gesendet wird, so dass entweder ein Signalpaket (Ed4/Od4) oder ein Signalpaket (Ed4/Od4) und ein weiteres Signalpaket (Ed3/Od1/Ed1/Od3) jeweils entweder durch eine Untertitelreihe oder zwei Untertitelreihen ersetzt wird/werden, so dass bei einer Untertitelreihe ein Signalpaket (Ed4/Od4) entfernt wird, das heißt das Helpet-Signal des unteren Teils des Bildes wird entfernt, und bei zwei Untertitelreihen das oben genannte Signalpaket (E4d/04d) und eines der Helper-Signalpakete des oberen Teils des aktiven Bildes entfernt werden, und dass das gesamte Zusatzsignal, wie z.B. das Helper-Signal, in das Videosignal gesetzt wird, das immer gesendet wird, während das Untertitel-Videosignal nicht gesendet wird.

15. Verfahren nach einem der vorherigen Ansprüche 5-14, dadurch gekennzeichnet, dass die Komponenten eines Zusatzsignals, wie z.B. eines Helper-Signals, in das zu sendende Videosignal gemäß ungeraden/geraden Bildfeldinformationen und der Zahl an der Phase des (R-Y)-Signals der Startzeile des Zusatzsignals, wie z.B. der Hilfsstartzeile, synchronisiert wurden.

16. Verfahren nach einem der vorherigen Ansprüche, dadurch gekennzeichnet, dass am Sendeende ein Zusatzsignal, wie z.B. ein Helper-Signal, gemäß dem Standard in einem Signalprozessor (18) umgruppiert wird, wo ein zu sendendes Untertitel-Videosignal damit verbunden wird.

17. Verfahren nach einem der vorherigen Ansprüche, dadurch gekennzeichnet, dass ein Zusatzsignal, wie z.B. ein Helper-Signal, durch Verbindung mit einem Untertitel-Videosignal ergänzt wird, das durch einen Bewegungsdetektor gesteuert wird, so dass Bewegungen des neuen Zusatzsignals in einem Zusatzsignal erkannt werden, und auf der Basis dieser Information in den fehlenden Teilen alternativ das alte Zusatzsignal verwendet wird, das alte Zusatzsignal in einer gedämpften Form verwendet wird oder das alte Zusatzsignal überhaupt nicht verwendet wird.

## Revendications

1. Procédé pour transférer une image pour écran large, notamment un procédé de transfert de type PALplus, dans lequel un signal vidéo représentant l'image pour écran large est transmis et est reçu et est présenté soit sur un écran large, soit sur un écran classique et, dans ce procédé, la résolution verticale de l'image transmise est réduite et un signal auxiliaire, tel qu'un signal d'assistance du procédé de transfert PALplus améliorant la résolution verticale, est ajouté au signal vidéo à l'extérieur du champ image actif et dans lequel la résolution verticale de l'image reçue est améliorée dans le récepteur de télévision par utilisation du signal auxiliaire, tel que le signal d'assistance, caractérisé en ce qu'un sous-titrage est transmis sous la forme d'un signal vidéo de sous-titre et ce signal vidéo de sous-titre est utilisé pour remplacer une partie du signal auxiliaire, tel que le signal d'assistance, lorsque le sous-titrage est transmis, puis, lorsque le signal auxiliaire n'est pas présent dans l'image en raison du sous-titrage, un signal auxiliaire tel que le signal d'assistance d'une image envoyée précédemment, est utilisé.

2. Procédé selon la revendication 1, caractérisé en ce qu'un signal auxiliaire, tel qu'un signal d'assistance, est de nouveau formé à partir du signal auxiliaire original, tel que le signal d'assistance, par modification de l'ordre des lignes.

3. Procédé selon les revendications 1 ou 2, caractérisé en ce qu'un signal auxiliaire, tel qu'un signal d'assistance, est placé en dessous du champ image actif.

4. Procédé selon les revendications 1, 2 ou 3, caractérisé en ce qu'au moins 50 % d'un signal auxiliaire, tel qu'un signal d'assistance, est transmis lorsqu'un signal vidéo de sous-titre est transmis, puis, de façon chronologique, lors d'une image sur deux, un signal auxiliaire, tel qu'un signal d'assistance de l'image précédente, est utilisé.

5. Procédé selon la revendication 4, caractérisé en ce qu'un signal auxiliaire, tel qu'un signal d'assistance, est divisé en quatre paquets différents de signaux auxiliaires (Eb1, Eb2, Ob1, Ob2) qui sont ensuite placés dans quatre moitiés de champs image paires/impaires séquentielles.

6. Procédé selon la revendication 5, caractérisé en ce que les composantes (Ea1, Ea2 ; Oa1, Oa2) du signal auxiliaire original, tel que le signal d'assistance, sont divisées de façon à ce qu'une ligne de signal auxiliaire sur deux d'une moitié d'un champ image (paire, impaire) soit placée dans le premier paquet de signal auxiliaire (Eb1, Ob1) et à ce qu'une ligne de signal auxiliaire sur deux soit placée dans le second paquet de signal auxiliaire (Eb2, Ob2).

7. Procédé selon la revendication 5, caractérisé en ce que des lignes de signal auxiliaire, telles que des lignes d'assistance (Ea1, Oa1) de la partie supérieure d'une moitié d'image originale, ont été placées dans le premier paquet de signal auxiliaire (Eb1, Ob1) et en ce que des lignes de signal auxiliaires, telles que des lignes d'assistance (Ea2, Oa2) de la partie inférieure, ont été placées dans le second paquet de signal auxiliaire (Eb2, Ob2).

8. Procédé selon l'une quelconque des revendications 4-7, caractérisé en ce que les emplacements des paquets de signaux auxiliaires (Eb1, Eb2, Ob1, Ob2) sont modifiés par groupes de quatre moitiés de champs image paires/impaires afin que les emplacements des premier (Eb1) et second (Eb2) paquets soient modifiés de façon alternée dans des moitiés de champs image paires et que, de façon respective, les emplacements des troisième (Ob1) et quatrième (Ob2) paquets soient modifiés de façon alternée dans des moitiés de champs image impaires.

9. Procédé selon la revendication 4, caractérisé en ce que le signal auxiliaire original, tel que le signal d'assistance, est divisé en huit paquets de signaux auxiliaires différents, tels que des paquets de signaux d'assistance (Ec1, Ec2, Ec3, Ec4 ; Oc1, Oc2, Oc3, Oc4) et en ce qu'ils sont placés dans quatre moitiés de champs image séquentielles.

10. Procédé selon la revendication 9, caractérisé en ce que le signal auxiliaire original, tel que le signal d'assistance, est divisé en huit paquets de signaux auxiliaires différents, tels que des paquets de signaux d'assistance (Ec1, Ec2, Ec3, Ec4 ; Oc1, Oc2, Oc3, Oc4) de façon à ce que chaque moitié de champ image contienne deux paquets de signaux auxiliaires, tels que des paquets de signaux d'assistance, et à ce que les quatre premiers paquets de signaux d'assistance (Ecl, Ec2, Ec3 et Ec4) et, de façon respective, les quatre paquets de signaux d'assistance suivants (Oc1, Oc2, Oc3, Oc4) soient formés de façon à ce qu'une ligne de signal sur quatre (ix4+1, 1<i<18) du signal auxiliaire, tel que le signal d'assistance de la moitié de champ image originale paire et de façon respective, impaire, soit disposée dans le premier paquet (Ec1) ainsi que dans le cinquième paquet (Oc1), à ce qu'une ligne de signal suivante sur quatre (ix4+2) soit placée dans le second paquet (Ec2) et le sixième paquet (Oc2) et à ce qu'une ligne de signal d'assistance suivante sur quatre (ix4+3 et ix4+4) soit placée dans les troisième et quatrième paquets (Ec3 et Ec4) et, d'une façon respective, dans les septième et huitième paquets (Oc3 et Oc4), de sorte que chaque paquet de signal (Ec1, Ec2, Ec3, Ec4 ; Oc1, Oc2, Oc3, Oc4) comprend 18 lignes.

11. Procédé selon la revendication 10, caractérisé en ce que les emplacements de huit paquets de signaux auxiliaires, tels que des paquets de signaux d'assistance, sont modifiés dans des groupes de quatre moitiés de champs image paires/impaires, de façon à ce que les emplacements des premières et secondes paires de paquets de signaux (Ec1, Ec2 et Ec3, Ec4) soient modifiés de façon alternée dans des moitiés de champs image paires et, de façon respective, de façon à ce que les emplacements des première et seconde paires de paquets de signaux (Oc1, Oc2 et Oc3, Oc4) soient modifiés de façon alternée dans des moitiés de champs image impaires (Tableau 2).

12. Procédé selon la revendication 9, caractérisé en ce que le signal auxiliaire original, tel que le signal d'assistance, est divisé en huit paquets de signaux auxiliaires différents, tels que des paquets de signaux d'assistance (Ed1, Ed2, Ed3, Ed4 ; Od1, Od2, Od3, Od4) de façon que chaque moitié de champ image contienne deux paquets de signaux auxiliaires, tels que des paquets de signaux d'assistance, et à ce que le premier paquet de signal (Ed1/Od1) soit formé d'un paquet de signal d'assistance (Ea1/Oa1) du signal d'assistance original et de la partie supérieure de la moitié d'image paire/impaire, de façon à ce qu'une ligne sur trois (i x 3 + 1, 1<i<18) du signal d'assistance soit contenue dans celle-ci, à ce que le second paquet de signal (Ed2/Od2) soit formé en incluant dans celui-ci une ligne suivante sur trois (ix3+2), à ce que le troisième paquet de signal (Ed3/Od3) soit formé en incluant dans celui-ci une ligne suivante sur trois (ix3+3) et à ce que le quatrième paquet de signal (Ed4/Od4) soit formé des lignes de signal d'assistance (lignes 55-72) du quart le plus bas du champ image original, et par conséquent, que chaque paquet comprenne 18 lignes.

13. Procédé selon la revendication 12, caractérisé en ce que les emplacements de huit paquets de signaux auxiliaires, tels que des paquets de signaux d'assistance (Ed1, Ed2, Ed3, Ed4 ; Od1, Od2, Od3, Od4), sont modifiés dans des groupes de quatre moitiés d'images paires/impaires, de façon à ce que lorsque le signal vidéo de sous-titre est transmis, seul un sur deux des premier (Ed1/Od1) et des troisièmes (Ed3/Od3) paquets de signaux d'assistance, soient transmis, à ce que le second paquet de signal d'assistance (Ed2/Od2) soit transmis lors de chaque moitié de champ image et à ce que le quatrième paquet de signal d'assistance (Ed4/Od4) ne soit transmis que lors de changements de sous-titres.

14. Procédé selon la revendication 13, caractérisé en ce qu'un signal auxiliaire, tel qu'un signal d'assistance, et un signal vidéo de sous-titre, sont transmis de façon à ce que soit un paquet de signal (Ed4 ; Od4), soit un paquet de signal (Ed4/Od4) et un autre paquet de signal (Ed3/Od1/Ed1/Od3) soient remplacés respectivement soit par une ligne de sous-titre, soit par deux lignes de sous-titre, de façon à ce que dans le cas d'une ligne de sous-titre, un paquet de signal (E4d/O4d) soit retiré, c'est-à-dire que le signal d'assistance de la partie inférieure de l'image soit retiré, et à ce que dans le cas de deux lignes de sous-titre, le paquet de signal mentionné ci-dessus (E4d/04d) et l'un des paquets de signaux d'assistance de la partie supérieure de l'image active, soient retirés et que la totalité du signal auxiliaire, tel que le signal d'assistance, soit placée dans le signal vidéo transmis en permanence lorsque le signal vidéo de sous-titre n'est pas transmis.

15. Procédé selon l'une quelconque des revendications 5-14 précédentes, caractérisé en ce que les composantes d'un signal auxiliaire, tel qu'un signal d'assistance, ont été synchronisées à l'intérieur du signal vidéo devant être transmis en conformité avec des informations de champs image impaires/paires et avec la configuration présentée par la phase du signal (R-Y) de la ligne de début du signal auxiliaire, telle que la ligne de début d'assistance.

16. Procédé selon l'une quelconque des revendications précédentes, caractérisé en ce qu'à l'extrémité effectuant la transmission, un signal auxiliaire, tel qu'un signal d'assistance respectant la norme, est reconfiguré dans un processeur de signal (18) auquel est connecté un signal vidéo de sous-titre devant être transmis.

17. Procédé selon l'une quelconque des revendications précédentes, caractérisé en ce qu'un signal auxiliaire, tel qu'un signal d'assistance est fourni en association avec un signal vidéo de sous-titre commandé par un détecteur de mouvement de façon qu'un mouvement du nouveau signal auxiliaire soit reconnu dans un signal auxiliaire et que, sur la base de ces informations, en variante, l'ancien signal auxiliaire soit utilisé, l'ancien signal auxiliaire étant utilisé sous forme atténuée ou l'ancien signal auxiliaire n'étant aucunement utilisé dans les parties manquantes.
